# EUROPÄISCHE PATENTANMELDUNG

(11) **EP 4 201 201 A1**
(43) Veröffentlichungstag der Anmeldung: **28.06.2023**
(21) Anmeldenummer: 22020617.1
(22) Anmeldetag: 19.12.2022
(51) Int. Cl.: A01K 63/00, A01K 63/04, A01K 63/06

(54) **AQUAKULTURLANGSTROMBECKEN UND VERFAHREN ZUM BETRIEB EINES LANGSTROMBECKENS**

(30) Priorität: 19.12.2021 DE 102021006242
(71) Anmelder: Vonnemann, Gerhard, 24321 Hohwacht (DE)
(72) Erfinder: Vonnemann, Gerhard, 24321 Hohwacht (DE)

(57) **Zusammenfassung**

Die Erfindung betrifft ein Aquakulturlangstrombecken (1) mit mindestens einem Verdichter (2), insbesondere zur Aufzucht von Warmwassertieren. Zur Verringerung der Mortalität der aufgezogenen Tiere ist vorgesehen, dass es ein Hälterungswasser (3) mit einer nitrifizierenden Bakteriengemeinschaft (4) beinhaltet und mindestens einen ortsfesten Ausströmer (5) aufweist, der vorzugsweise um eine ortsfeste Schwenkachse (6) schwenkbar ausgebildet ist und vom Verdichter (2) gespeist ausgebildet ist. Die in einem solchen Becken aufgezogenen Tiere zeigen zusätzlich eine größere Resistenz gegen Krankheitskeime und ein schnelleres Wachstum bei geringerem Futterverbrauch. Das erfindungsgemäße Verfahren zum Betreiben eines Langstrombeckens mit einem Hälterungswasser, das eine nitrifizierende Bakteriengemeinschaft aufweist, sieht vor, dass das Langstrombecken der Länge nach mittels Trennwände in einzelne Kompartements zur Hälterung von Kohorten von Wasserlebewesen mit kohortenspezifischer Biomasse geteilt wird und die Trennwände kontinuierlich oder vorzugsweise in zeitlichen Abständen so verschoben werden, dass die Volumina der Kompartiments an den Raumbedarf der sich ändernden Kohortenbiomasse angepasst werden.

## Beschreibung

Die Erfindung betrifft ein Aquakulturlangstrombecken mit mindestens einem Verdichter, insbesondere zur Aufzucht von Warmwassertieren.

Außerdem betrifft die Erfindung ein Verfahren zum Betreiben eines Langstrombeckens mit einem Hälterungswasser, das eine nitrifizierende Bakteriengemeinschaft aufweist.

Derartige Aquakulturlangsstrombecken dienen zur Hälterung von Wasserlebewesen, wie z.B. von Krustentieren, insbesondere Garnelen, oder von Fischen, wie Tilapien.

Seit die Meere überfischt sind, werden immer mehr Spezies in der Aquakultur gehalten, um die Bestände im Meer zu schonen. Bei der Aufzucht der Wasserlebewesen bilden die das Wasservolumen aufnehmende Becken den Lebensraum der Tiere. Die Becken werden intervallweise mit einer Anzahl junger Tiere, sogenannte Kohorten, besetzt. Die Becken werden in im Grundriss kreisförmige Becken und in rechteckförmige Becken, sogenannte Langstrombecken oder raceways, unterschieden, die strömungstechnisch bekannte Vor- und Nachteile besitzen. Das Wasser im Becken bildet das Lebensumfeld der Tiere und es muss deshalb bestimmten Qualitätsmerkmalen genügen. Ein ständiger Wasseraustausch ist deshalb unabdingbar, bei dem das Zulaufwasser die Qualitätskriterien erfüllen muss.

Bei der einfachsten Form, dem offenen Kreislauf oder auch als "Oceanloop" beworbenen Kreislauf, wird Frischwasser dem Meer entnommen, mechanisch gefiltert, ggf. mit Ozon oder UV-C-Licht sterilisiert, mit Sauerstoff angereichert und ins Becken gepumpt. Das aus dem Becken ablaufende, von den Ausscheidungen der Tiere belastete, Wasser wird zurück in die Umwelt, meist wieder dem Meer übergeben. Die Folge ist die Eutrophierung des Meeres.

Solche Altanlagen haben Bestandsschutz, sind aber nicht mehr genehmigungsfähig.

Bei bekannten neuen Anlagen, wird das Wasser im Kreis geführt und das ablaufende Beckenwasser so aufgearbeitet, das es den Qualitätsanforderungen der Tiere entspricht. Dazu sind erhebliche Investitionen zur Errichtung von Biofiltern deren Betrieb zur Nitrifikation und Denitrifikation der im ablaufenden Beckenwasser enthaltenen Ausscheidungen. Die Verfahrenswege entsprechen dem bekannten biologischen Stickstoffkreislauf.

Da die Lebewesen während der Aufzucht durch ihr Wachstum immer mehr Wasservolumen beanspruchen, müssen die Lebewesen bei Überschreiten einer für jede Spezies charakteristischen Besatzdichte in ein größeres Wasservolumen umgesetzt werden. Beim Umsetzen sind nennenswerte Verluste durch verletzte Tiere unvermeidlich. Dem Tierwohl sind solche Umsetzungen abträglich.

Zur Verringerung solcher Umsetzverluste ist bekannt, in Langstrombecken bewegliche Trennwände vorzusehen, die sich je nach der Volumenforderung einer Kohorte versetzt werden können. Häufig werden in solchen Becken, die Längen von 20 m und mehr und Breiten von 2 m, häufig 5 m, oder mehr aufweisen auch 2 und mehr, z.B. 4 Trennwände vorgesehen. Ein einem Ende des Beckens werden die jüngsten, also kleinsten Tiere eingesetzt und an dem andren Ende des Beckens die ältesten und schwersten Tiere der jeweiligen Alterskohorte geerntet.

Zur Verringerung der Investitions- und Betriebskosten bei vergleichbarem Aufzuchtergebnis, d.h. erntereifer Biomasse pro Jahr, ist es bei Rundbecken bekannt, für die Tiere im Aufzuchtbecken eine naturähnliche nitrifizierende Umgebung zu schaffen. Die Investions- und Betriebskosten für das nitrifizierende Biofilter werden dadurch vorteilhaft vermieden. Die nachteiligen Umsetzverluste werden aber in Kauf genommen.

Gerade exotische Tiere, wie z.B. Warmwassergarnelen, litpenaeus vannamei, oder Tilapien, die geographisch zwischen den Wendekreisen beheimatet sind, lassen sich in europäischen Aquakulturen nicht zu Kosten aufziehen, die dem Wildfang entsprechen.

Die Tiere werden auch im Tropengürtel in pondbasieren extensiven Aquakulturen aufgezogen, die durch ihren hohen Flächenverbrauch die Mangrovenwälder zerstören und durch offene Kreisläufe die Meere eutrophieren. Durch die in Flächen von tausend und mehr ha großen Farmen ist das Einschleppen aus dem Meer von Krankheitskeimen und die Übertragung Keime auf die Tiere nicht selten. Der großen ökonomischen Bedeutung wegen, wird diesem Problem mit Einsatz von Antibiotika begegnet, die sich auch im verzehrfertigen Endprodukt noch nachweisen lässt. Nach der Ernte werden sie gefrostet und mit einer 25%igen Wasserglasur versehen auf die europäischen Märkte geflogen, was eine weitere Vergrößerung des CO2-Fußabdrucks des Produktes zur Folge hat.

Es besteht somit ein dringendes Bedürfnis an Aquakulturlangstrombecken und Verfahren zu Betrieb eines Langstrombeckens, die eine ökologisch unbedenkliche, antibiotikafreie wirtschaftliche Aufzucht von Wasserlebewesen in geschlossenen Wasserkreisläufen unter europäischen klimatischen und tierwohlfördernden Bedingungen ermöglicht.

Bei einem Aquakulturlangstrombecken (1) mit mindestens einem Verdichter (2), insbesondere zur Aufzucht von Warmwassertieren, wird diese Aufgabe dadurch gelöst, dass es ein Hälterungswasser (3) mit einer nitrifizierenden Bakteriengemeinschaft (4) beinhaltet und mindestens einen ortsfesten Ausströmer (5) aufweist, der vorzugsweise um eine ortsfeste Schwenkachse (6) schwenkbar ausgebildet ist und vom Verdichter (2) gespeist ausgebildet ist. Durch die nitrifizierende Bakteriengemeinschaft können die Ausscheidungen der Tiere zu ungiftigem Nitrat abgebaut werden. Ein getrennter Biofilter zu diesem Zweck wird also vorteilhaft vermieden. Nachteilig ist jedoch, dass die Bakteriengemeinschaft flocken bildet, die in Schwebe gehalten werden müssen, um wiederum toxische Prozesse durch Sauerstoffmangel zu verhindern. Dazu dient ein Verdichter, der Umgebungsluft mittels Ausströmern im Wasser so verteilt, dass ein ständiges Rühren bewirkt wird und auf diese Weise verhindert, dass sich die Flocken in toten Ecken ablagern. Gleichzeitig kann auf die sonst übliche Sauerstoffanreicherung mittels Einleiten von technischem Sauerstoff verzichtet werden, da von der zum Rühren mittels Verdichter eingeleitete Luft ausreichend Sauerstoff im Beckenwasser gelöst wird. Als Ausströmer können kostengünstig zu erwerbende poröse Ausströmerschläuche genutzt werden. Zur leichteren Wartung und damit die Trennwände leicht an den Ausströmern vorbei bewegt werden können, kann der Ausströmer um eine oberhalb des Wasserniveaus angeordnete, horizontale Schwenkachse aus dem Wasser herausbewegt werden. Aufgrund der erfindungsgemäß vorgesehenen im Beckenwasser vorhandenen nitrifizierenden Bakteriengemeinschaft verbietet sich der Einsatz von Antibiotika. Die Konsumenten der Tiere können deshalb auch nicht durch Restgehalte an Antibiotika gesundheitlich gefährdet werden. Die in der Heimat der gezüchteten Tiere vorhandenen Krankheitserreger sind aufgrund der andren klimatischen Verhältnisse in der Natur nicht vorhanden und können aufgrund des geschlossenen Wasserkreislaufs auch nicht eingetragen werden. Die Biosicherheit ist deshalb vorteilhaft hoch, da auch nur nachgewiesener Maßen erregerfreie Jungtiere aufgezogen werden. Die in einem solchen Becken aufgezogenen Tiere zeigen zusätzlich eine größere Resistenz gegen Krankheitskeime und ein schnelleres Wachstum bei geringerem Futterverbrauch.

In Ausgestaltung der Erfindung ist vorgesehen, dass das Langstrombecken in Längsrichtung (7) des Beckens (1) verschiebliche Trennwände (8) aufweist, die vorzugsweise mittels eines Zahnriementriebs (9) verschiebbar sind, wobei der Zahnriementrieb (9) vorzugsweise in Beckenlängsrichtung (7) mindestens einen linear geführten Wagen (10) ziehend ausgebildet ist, mit dem die Trennwand (8) mittels Lenker (11) schwenkbar verbunden ist. In den Becken lassen sich also ebensoviele Kohorten unterschiedlichen Alters unterbringen, wie Trennwände vorgesehen sind. Je mehr Trennwände vorgesehen werden, desto häufiger kann geerntet werden. Bei einer einzigen Kohorte, also einem Becken ohne Trennwand, blockiert die Kohorte das Volumen, bis die Individuen das Erntegewicht erreicht haben und abgeerntet werden können. Bei einer existierenden Trennwand können zwei Kohorten mit etwa halbierter Individuenzahl und unterschiedlichen Alters das Becken nutzen. Die Folge ist, eine vorteilhaft höhere Zuchtkapazität bei geringerem Volumen. Das Abernten kann somit verstetigt werden, was im Betriebsablauf viele Vorteile durch den stetigeren Produktfluss ermöglicht.

Der Zahnriementrieb (9) treibt in Beckenlängsrichtung (7) linear in einer Führung (37) geführte Wagen (10) an, die in ihrer Anzahl als Paare der Anzahl Trennwände entsprechen. Durch die Führung erfolgt das Verschieben vorteilhaft gleichmäßig, so dass sich beim Verschieben keine seitlichen Spalte an den Trennwänden ausbilden. Dadurch, dass die Trennwand (8) mit dem Wagen mittels Lenker (11) schwenkbar verbunden ist, können auch Unebenheiten des Beckenbodens selbsttätig ausgeglichen werden.

In weiter Ausgestaltung der Erfindung ist vorgesehen, dass das Becken einen Deckel (12) aufweist, der vorzugsweise segmentiert ausgebildet ist, wobei einzelne Segmente (13) als Fenster (14) ausgebildet sind. Da die Tiere, insbesondere Garnelen, sehr sprungfreudig sind, werden zur Verhinderung von Verlusten um die Becken Netze gespannt, die dies verhindern. Mit Vorteil kann auch darauf verzichtet werden, weil der Deckel ein unerwünschtes Verlassen der Tiere aus dem Becken verhindert. Durch die Segmentierung bleibt die Wasseroberfläche trotzdem leicht zugänglich, indem einzelne Segmente bei Bedarf entfernt werden können. Dem Tierwohl ist es zuträglich, wenn einzelne Segmente als Fenster ausgebildet sind. Durch das einfallende Licht wird durch den Tag- Nacht-Rhythmus das Wachstum vorteilhaft stimuliert.

In weiter Ausgestaltung der Erfindung ist vorgesehen, dass in Längsrichtung (7) des Beckens (1) ein Ausströmerluftverteiler (15) angeordnet ist und dass das Becken (1) eine Abluftöffnung (16) mit einer Abluftleitung (17) zum Abführen von Abluft aufweist, wobei die Abluftöffnung (16) vorzugsweise im Deckel (1) angeordnet ist. Der wirtschaftliche Betrieb der Gesamtanlage wird durch die Vermeidung von Strömungsverlusten wesentlich gesteigert. Die Prozessluft wird deshalb geordnet in und aus dem Becken geführt. Noch weiter lassen sich die Strömungsverluste drücken, wenn der Verdichter ungefähr auf der halben Beckenlänge angeordnet ist. Dies hat ein besonders gleichmäßiges Blasenbild auf der Wasseroberfläche zur Folge. Der Verdichter erreicht dadurch auch bei geringerer Leistung die erforderliche gleichmäßige Durchmischung des Wasservolumens.

Besonders vorteilhaft einfach und robust lassen sich Wärmeverluste des Wassers weiter Ausgestaltung der Erfindung ausgleichen, wenn der Verdichter (2) eine Lufteintrittsöffnung (18) mit einer Ansaugleitung (19) aufweist, in deren Verlauf ein Zulufterwärmer (20) angeordnet ist, und der Verdichter (2) eine Luftaustrittsöffnung (21) mit einem Leitungsweg (22) zu den Ausströmern (5) aufweist. Die zum Rühren eingebrachte Zuluft kann erfindungsgemäß zusätzlich erwärmt werden, so dass sich Wärmeverluste des Wassers dadurch die enigeblasene Luft des Verdichters ausgleichen lassen. Zusätzliche Wärmetauscher im Becken werden dadurch vorteilhaft vermieden.

Zur weiteren Senkung der Betriebskosten ist in weiter Ausgestaltung der Erfindung vorgesehen, dass in der Abluftleitung (17) ein Abluftkühler (23) vorgesehen ist, wobei eine Kondensatfalle (24) mit Kondenswasserleitung (25) zum Beckeninneren vorgesehen ist. Auf diese Weise lässt sich das als Luftfeuchte in der Abluft enthaltene Wasser als Kondensat zurückgewinnen und über die Kondensatwasserleitung dem Beckenwasser zuführen. Die Kosten für Trinkwasser und dessen Konditionierung vor seiner Verwendung können erfindungsgemäß gespart werden.

In weiter Ausgestaltung der Erfindung ist vorgesehen, dass der Zulufterwärmer (20) und der Abluftkühler (23) in einem Kreuzstromwärmetauscher (26) vereinigt ausgebildet sind oder über einen Kältemittelkreislauf (27) einer Wärmepumpe (28) miteinander gekoppelt ausgebildet sind. Erfindungsgemäß wird auf diese Weise eine besonders wirtschaftlich günstige und technisch einfache Wärmerückgewinnung verwirklicht, die die Betriebskosten weiter sinken lässt. Solche Kreuzstromwärmetauscher sind als Plattenwärmetauscher verfügbar. Sie finden in der Hauslüftungstechnik Anwendung. Dabei sind zusätzliche Lüfter besonders vorteilhaft, die das Ansaugen der Luft und das Ausstoßen der Abluft unterstützen. Durch eine alternative oder zusätzliche Wärmepumpe kann der Einsatz noch zusätzlich erweitert werden.

In weiter Ausgestaltung der Erfindung ist vorgesehen, dass das Becken (1) und der Deckel (2) eine Wärmeisolationsschicht (29) aufweisen, wodurch sich die Wärmeverluste der Gesamtanlage auf ein bisher noch nicht erreichtes Maß verringern lassen. Erstmalig ist es möglich z.B. fangfrische Garnelen ohne aufwendige Flugtransportleistungen dem europäischen Markt zu konkurrenzfähigen Preisen zur Verfügung zu stellen. Dabei werden keine Abstriche beim Tierwohl oder bei der Qualität des Produktes notwendig. Die Produkte lassen sich so frisch regional ohne Einsatz von Antibiotika vermarkten.

Die Aufgabe der Erfindung wird auch durch ein Verfahren zum Betreiben eines Langstrombeckens mit einem Hälterungswasser, das eine nitrifizierende Bakteriengemeinschaft aufweist, gelöst, bei dem das Langstrombecken der Länge nach mittels Trennwände in einzelne Kompartements zur Hälterung von Kohorten von Wasserlebewesen mit kohortenspezifischer Biomasse geteilt wird und die Trennwände kontinuierlich oder vorzugsweise in zeitlichen Abständen so verschoben werden, dass die Volumina der Kompartiments an den Raumbedarf der sich ändernden Kohortenbiomasse angepasst werden. Mit diesem Verfahren lassen sich besonders Warmwasserlebewesen auch im europäischen Klima wirtschaftlich aufziehen.

In Ausgestaltung des Verfahrens ist vorgesehen, dass Abluft- und Zuluftströme gefasst werden, und die in der Abluft enthaltenen Wärme mindestens teilweise auf die Zuluft übertragen wird und/oder wobei die in der Abluft enthaltene Feuchte als Kondensat dem Hälterungswasser zugeführt wird. Der durch diese technische Maßnahme erwartungsgemäß höhere Wartungsaufwand der Anlage wird durch überraschend hohe Kostenvorteile kompensensiert. Insgesamt sinkt so der CO2 Fußabdruck der Anlage und der damit erzeugten Produkte auf einen bisher nicht gekanntes niedriges Niveau.

Eine bevorzugte Ausführungsform der Erfindung wird beispielhaft an Hand einer Zeichnung erläutert. Die Figuren der Zeichnung zeigen im Einzelnen:
- Figur 1: eine schematischen Längsschnitt durch das erfindungsgemäße Langstrombecken,
- Figur 2: eine schematische Seitenansicht des in Figur 1 dargestellten Langstrombeckens und
- Figur 3: ein Rohhrleitungsschema der Veerdichterleitungen.

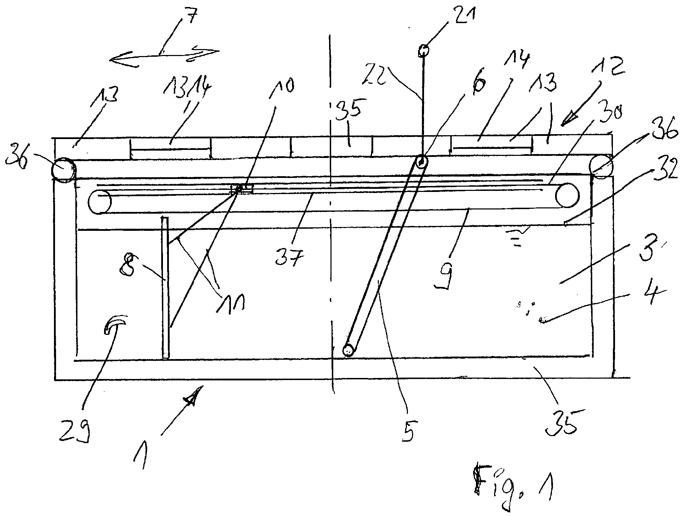

In den Figuren 1 bis 3 funktionsgleiche Teile mit gleichen Bezugsziffern versehen. In Figur 1bezeichnet die Bezugsziffer 1 die erfindungsgemäße

In Figur 1 ist ein Aquakulturlangstrombecken 1 mit einem auf einem Deckel 2 angeordneten Verdichter 2 schematisch als vertikal geführter Längsschnitt durch die Beckenmittelachse dargestellt. Ein solches Becken hat Maße von 5 mal 25 Metern und dient zur Aufzucht von Garnelen 29, die in Salzwasser bei ca 30 °C aufgezogen werden.

Um die Temperatur von ca 30 °C im Becken besser halten zu können ist das Becken 1 und der Deckel 2 eine Wärmeisolationsschicht 35 versehen und an der umlaufenden Berührungslinie eine Dichtung 36 zwischen Deckel 12 und Becken 1 angeordnet.

Das Hälterungswasser 3 enthält eine nitrifizierende Bakteriengemeinschaft 4. Von einer in Beckenlängsrichtung 7 gereiht angeordneten Anzahl von gleichartigen Ausströmern 5 ist hier nur ein ortsfester Ausströmer 5 dargestellt. Er ist um eine ortsfeste horizontale Schwenkachse 6 schwenkbar. Mit Luft wird von Verdichter 2 versorgt. Altenativ kann auch der Boden des Beckens 2 mit einer ausreichenden Anzahl von Auströmeröffnungen für die Verteilung von Rührluft versehen sein. Wichtig ist, dass die zusätzlich in Figur 1 gezeigten Trennwände, die in analoger Weise in Längsrichtung 7 des Beckens gereiht angeordnet sind, die Ausströmeröffungen ungestört passieren können.

Die in Längsrichtung 7 des Beckens 1 alleinig dargestellte Trennwand 5, die als Beispiel für die anderen dargestellt ist, ist verschieblich. Dazu dient der Zahnriementriebs 9 an dessen Obertrum 30 die Trennwand 5 lösbar befestigt ist. Zum Verschieben in Beckenlängsrichtung 7 dient ein linear geführtes Wagenpaar 10, von dem in dieser Darstellung nur einer sichtbar ist. Das Wagenpaar wird von dem Obertrum 30 gezogen. Die Trennwand 8 ist mittels Lenker 11 schwenkbar mit dem Wagenpaar 10 verbunden.

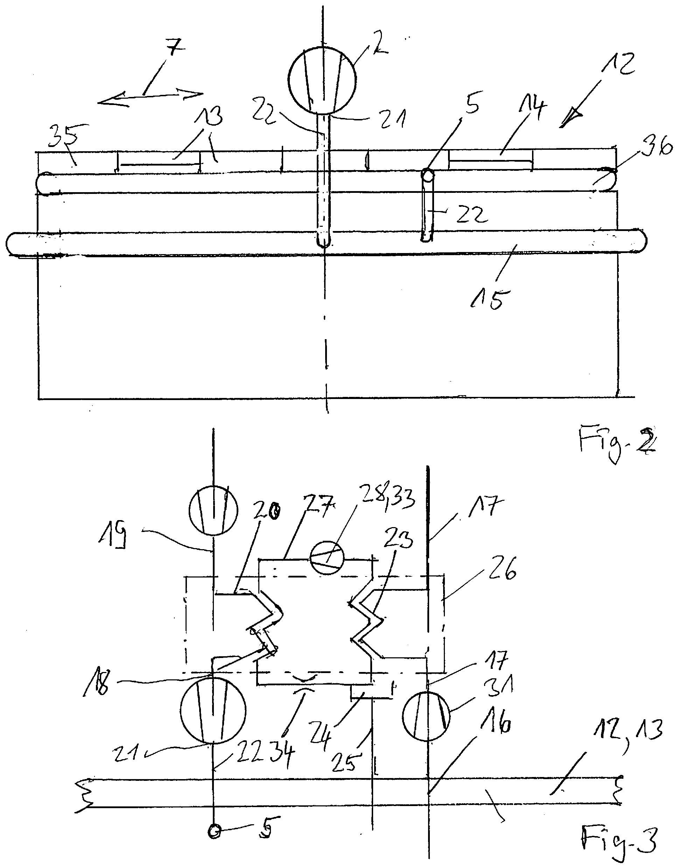

In Figur 2 ist eine Seitenansicht des in Figur 1 dargestellten Langstrombeckens 1 gezeigt. Das Becken 1 ist komplett mit einem Deckel 12 verschlossen, der segmentiert ist, wobei einzelne Segmente 13 als Fenster 14 ausgebildet sind, so dass die Tiere einen lichtgesteuerten Tag-Nacht-Rhythmus erfahren.

in Längsrichtung 7 des Beckens 1 ist ein Ausströmerluftverteiler 15 angeordnet, der sich über die gesamte Länge des Beckens 1 erstreckt. In diesen Auströmerluftverteiler 15 die über die gesamte Beckenlänge gereihten Leitungswege 22 des Verdichters 2 zu den Ausströmern 5, so dass der Verteiler 15 Teil des Leitungsweges 22 ist.

Schließlich zeigt die Figur 3 ein Rohrleitungsschema des Beckens 1.

Das Becken 1 weist eine Abluftöffnung 16 in Deckel 12 auf, die mit einer Abluftleitung 17 zum Abführen von Abluft verbunden ist. In dieser Leitung 17 ist zusätzlich ein Saugzug 31, der die Luft über der Wasseroberfläche 32 aus dem Becken absaugt und über Leitung 17 nach Außen drückt.

Der Verdichter 2 hat eine Lufteintrittsöffnung 18 mit einer Ansaugleitung 19. Im der Verlauf der Ansaugleitung 19 ist ein Zulufterwärmer 20 angeordnet. Außerdem weist der Verdichter 2 eine Luftaustrittsöffnung 21 mit dem Leitungsweg 22 mit Ausströmerluftverteiler 15 zu den Ausströmern 5 auf.

In der Abluftleitung 17 ist ein Abluftkühler 23 mit einer Kondensatfalle 24 angeordnet. Das sich im Abluftkühler bildende Kondensat wird in der Kondensatfalle 24 gesammelt und über die Kondenswasserleitung 25 zum Beckeninneren geleitet.

Der Zulufterwärmer 20 und der Abluftkühler 23 sind in einem Kreuzstromwärmetauscher 26 vereinigt, was durch die strich-punktierte Linie 26 angedeutet sein soll. Zusätzlich ist ein alternativer oder ergänzender Kältemittelkreislauf 27 als Wärmepumpe 28 dargestellt mit Kompressor 33 und Verduster 34 gezeigt, der mit Zulufterwärmer 20 und Abluftkühler 23 gekoppelt ausgebildet ist.

### Bezugsziffernliste

1. Aquakulturlangstrombecken, Becken
2. Verdichter
3. Hälterungswasser
4. Bakteriengemeinschaft
5. Ausströmer
6. Schwenkachse
7. Längsrichtung, Becken-
8. Trennwände
9. Zahnriementrieb
10.Wagen
11.Lenker
12.Deckel
13.Segmente
14.Fenster
15.Ausströmerluftverteiler
16.Abluftöffnung
17.Abluftleitung
18.Lufteintrittsöffnung
19.Ansaugleitung
20.Zulufterwärmer
21.Luftaustrittsöffnung
22.Leitungsweg
23.Abluftkühler
24.Kondensatfalle
25.Kondenswasserleitung
26.Kreuzstromwärmetauscher
27.Kältemittelkreislauf
28.Wärmepumpe
29.Garnele
30.Obertrum
31.Saugzug
32.Wasseroberfläche
33.Kompressor
34.Verdampfer
35.Wärmeisolationsschicht
36.Dichtung
37.
38.
39.
40.
41.
42.
43.
44.
45.
46.
47.
48.
49.

## Patentansprüche

1. Aquakulturlangstrombecken (1) mit mindestens einem Verdichter (2), insbesondere zur Aufzucht von Warmwassertieren, **dadurch gekennzeichnet, dass** es ein Hälterungswasser (3) mit einer nitrifizierenden Bakteriengemeinschaft (4) beinhaltet und mindestens einen ortsfesten Ausströmer (5) aufweist, der vorzugsweise um eine ortsfeste Schwenkachse (6) schwenkbar ausgebildet ist und vom Verdichter (2) gespeist ausgebildet ist.

2. Aquakulturlangstrombecken nach Anspruch 1, **dadurch gekennzeichnet, dass** es in Längsrichtung (7) des Beckens (1) verschiebliche Trennwände (8) aufweist, die vorzugsweise mittels eines Zahnriementriebs (9) verschiebbar sind, wobei der Zahnriementrieb (9) vorzugsweise in Beckenlängsrichtung (7) mindestens einen linear in einer Führung (37) geführten Wagen (10) ziehend ausgebildet ist, mit dem die Trennwand (8) mittels Lenker (11) schwenkbar verbunden ist.

3. Aquakulturlangstrombecken nach Anspruch 1 oder 2, **dadurch gekennzeichnet, dass** es einen Deckel (12) aufweist, der vorzugsweise segmentiert ausgebildet ist, wobei einzelne Segmente (13) als Fenster (14) ausgebildet sind.

4. Aquakulturlangstrombecken nach Anspruch 1, 2 oder 3, **dadurch gekennzeichnet, dass** in Längsrichtung (7) des Beckens (1) ein Ausströmerluftverteiler (15) angeordnet ist und dass das Becken (1) eine Abluftöffnung (16) mit einer Abluftleitung (17) zum Abführen von Abluft aufweist, wobei die Abluftöffnung (16) vorzugsweise im Deckel (1) angeordnet ist.

5. Aquakulturlangstrombecken nach einem oder mehreren der vorhergehenden Ansprüche, **dadurch gekennzeichnet, dass** der Verdichter (2) eine Lufteintrittsöffnung (18) mit einer Ansaugleitung (19) aufweist, in deren Verlauf ein Zulufterwärmer (20) angeordnet ist, und der Verdichter (2) eine Luftaustrittsöffnung (21) mit einem Leitungsweg (22) zu den Ausströmern (5) aufweist.

6. Aquakulturlangstrombecken nach einem oder mehreren der vorhergehenden Ansprüche, **dadurch gekennzeichnet, dass** in der Abluftleitung (17) ein Abluftkühler (23) vorgesehen ist, wobei eine Kondensatfalle (24) mit Kondenswasserleitung (25) zum Beckeninneren vorgesehen ist.

7. Aquakulturlangstrombecken nach einem oder mehreren der vorhergehenden Ansprüche, **dadurch gekennzeichnet, dass** der Zulufterwärmer (20) und der Abluftkühler (23) in einem Kreuzstromwärmetauscher (26) vereinigt ausgebildet sind oder über einen Kältemittelkreislauf (27) einer Wärmepumpe (28) miteinander gekoppelt ausgebildet sind.

8. Aquakulturlangstrombecken nach einem oder mehreren der vorhergehenden Ansprüche, **dadurch gekennzeichnet, dass** das Becken (1) und der Deckel (2) eine Wärmeisolationsschicht (35) aufweisen.

9. Verfahren zum Betreiben eines Langstrombeckens mit einem Hälterungswasser, das eine nitrifizierende Bakteriengemeinschaft aufweist, **dadurch gekennzeichnet, dass** das Langstrombecken der Länge nach mittels Trennwände in einzelne Kompartements zur Hälterung von Kohorten von Wasserlebewesen mit kohortenspezifischer Biomasse geteilt wird und die Trennwände kontinuierlich oder vorzugsweise in zeitlichen Abständen so verschoben werden, dass die Volumina der Kompartiments an den Raumbedarf der sich ändernden Kohortenbiomasse angepasst werden.

10. Verfahren zum Betreiben eines Langstrombeckens mit einem Hälterungswasser, das eine nitrifizierende Bakteriengemeinschaft aufweist, **dadurch gekennzeichnet, dass** Abluft- und Zuluftströme gefasst werden, und die in der Abluft enthaltenen Wärme mindestens teilweise auf die Zuluft übertragen wird und/oder wobei die in der Abluft enthaltene Feuchte als Kondensat dem Hälterungswasser zugeführt wird.
